(19) Europäisches Patentamt / European Patent Office / Office européen des brevets

(11) **EP 2 444 879 A2**

## (12) EUROPEAN PATENT APPLICATION

(43) Date of publication:
**25.04.2012 Bulletin 2012/17**

(51) Int Cl.:
**G06F 3/044** (2006.01)

(21) Application number: **11184696.0**

(22) Date of filing: **11.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.10.2010 JP 2010234763**

(71) Applicant: **Hosiden Corporation
Yao-shi, Osaka 581-0071 (JP)**

(72) Inventor: **HIrai, Seisaku
Osaka 5810071 (JP)**

(74) Representative: **Lemcke, Brommer & Partner
Patentanwälte
Bismarckstrasse 16
76133 Karlsruhe (DE)**

(54) **Touch-sensitive coordinate input apparatus, touch panel and electronic devices having the same**

(57) A touch-sensitive coordinate input apparatus includes a plurality of regions (3,4) on a substrate (1), each region being defined by four electrodes (2A, 2B, 2C, 2D; 4A, 4B, 4C, 4D) disposed rectangularly, and also includes a dielectric (6) disposed across the four electrodes in each region (3, 4). A position-detecting mechanism (7,8) obtains position information of a touch operation by calculating changes in capacitance of the four electrodes (2A, 2B, 2C, 2D; 4A, 4B, 4C, 4D) for every region caused by the touch operation to the dielectric (6) within the region (3,4), and a compound-processing mechanism (9) conducts a calculation processing based on the position information in at least two of the plurality of regions (3,4).

Fig.1

EP 2 444 879 A2

**Description**

BACK GROUND

1. Field of Invention

The present invention relates to a capacitive type touch sensitive coordinate input apparatus which enables simultaneous detection of a plurality of points of touch operation.

2. Description of the Related Art

A touch panel, one of the touch-sensitive coordinate input apparatus, is applied onto a surface of a display screen of an image-displaying device such as a liquid crystal display, and used for inputting information through a pressing operation. Recently, there has been a touch panel which detects coordinates of simultaneously pressed two points and conducts an input operation of such coordinates.

For example, a resistive touch panel disclosed in Japanese Unexamined Patent Application Publication No. 2005-49978 has a press input region divided into several parts, which thus enables coordinate detection of a pressed points in each of the two parts (two points) of the press input region.

In addition, a capacitive touch panel disclosed in Japanese Unexamined Patent Application Publication No. 2009-9249 has a layer of an electrode group for detecting a coordinate in an X direction and a layer of an electrode group for detecting a coordinate in a Y direction, which layers are laminated together so as to enable detection of coordinates of simultaneously pressed two points.

However, in the resistive touch panel disclosed in the former patent document, since the pressed points are detected by bending a surface film downwardly with an external pressure and bringing the electrodes into contact with each other, the resistive touch panel has less operability than that of the capacitive touch panel when operated with fingers.

On the other hand, although the capacitive touch panel shown in the latter patent document has better operability over the resistive touch panel, its manufacturing process is complicated since it involves formation of the layer of the electrode group for detecting a coordinate in the X direction and that of the Y direction. Also, laminating these two layers gives a certain thickness to the touch panel.

Accordingly, it is desirable to provide a touch-sensitive coordinate input apparatus which is a capacitive type, and able to detect a plurality of touch points even though the apparatus has a simple configuration.

SUMMARY OF THE INVENTION

In one aspect of the present invention, there is provided a touch-sensitive coordinate input apparatus including: a plurality of regions on a substrate, each region being defined by four electrodes disposed rectangularly; a dielectric disposed across the four electrodes in each region; a position-detecting mechanism for obtaining position information of a touch operation by calculating changes in capacitance of the four electrodes for each region caused by the touch operation to the dielectric within the region; and a compound-processing mechanism which conducts a calculation processing based on the position information in at least two of the plurality of regions.

With this configuration, the capacitances of the four electrodes in each region are changed by an individual touch operation to the dielectric within each of the plurality of regions in accordance with the touch operation, and the position-detecting mechanism calculates these changes of the capacitances. As a result, the position information of touch operation for each region can be obtained. Also, since there is provided a compound-processing mechanism which conducts a calculation processing based on the position information in at least two of the plurality of regions, a compound-processing can be performed based on the calculation results of, for example, changes in a distance between two points which have been obtained as position information in two regions. Consequently, it is possible to set the processing, for example, such that the touch operation of directing the two points away from each other is recognized as an action of zooming an image on the screen, and the touch operation of directing the two points close to each other is recognized as an action of reducing an image on the screen. In this manner a variation of input by the touch operation to the touch-sensitive apparatus for inputting coordinate can be increased.

In addition, since the four electrodes in each region are arranged rectangularly, there is no need for laminating two layers including the layer of the electrode group for detecting a coordinate in the X direction and that of the Y direction, and an electrode layer can be formed of a single layer. As a result, a structure of the touch-sensitive apparatus for inputting coordinate can be simplified and thinned.

In the apparatus described above, it is preferable that at least two of the plurality of regions are adjacently disposed each other.

With this configuration, at least two regions are adjacently disposed, and therefore a simultaneous touch operation in the adjacent two regions is facilitated. For example, when the touching operations are performed on the respective regions by a thumb and a forefinger of the same hand, the operative area in which the two fingers can touch the region is limited according to a distance between the two fingers. If at least two of the plurality of regions are adjacently disposed, the two regions are close to each other and facilitate the simultaneous touch operation with two fingers. As a result, an action of making a distance between the two points longer or shorter can be easily operated.

In the apparatus described above, it is also preferable that the dielectric is made of a transparent material.

With this configuration, by making the dielectric using a transparent material, there can be secured a visual recognition of a display screen such as liquid crystal display disposed under the touch-sensitive coordinate input apparatus, without being hindered by the dielectric.

In the apparatus described above, it is still preferable that at least one of the four electrodes is made of a transparent material.

With this configuration, at least one of the four electrodes is made of a transparent material. As a result, when the touch-sensitive coordinate input apparatus is used as a touch panel, the visual recognition area of the display device, such as liquid crystal display, disposed under the touch-sensitive coordinate input apparatus can be extended to include the transparent electrode, and thus the operability of the touch panel can be improved.

In the apparatus described above, it is still preferable that the dielectric is made of glass.

With this configuration, by making the dielectric using glass, the dielectric can be easily made transparent and its surface can be easily made flat and smooth. Also, as a glass seldom changes its color, transparency of the dielectric can be easily maintained. In addition, when the glass is disposed on the surface of the apparatus, the glass as a hard material hardly has scratches even though dust or the like is present between the glass and a finger.

In the apparatus described above, it is yet preferable that the electrode is made of ITO.

With this configuration, by making the electrode using ITO, the transparent electrodes can be easily manufactured.

In another aspect of the present invention, there is provided a touch panel including: a display device; and the touch-sensitive coordinate input apparatus having the features described above which is disposed on the display device.

With this configuration, a structure of the touch panel can be simplified and thinned.

In still another aspect of the present invention, there is provided an electronic device including: the touch panel or the touch-sensitive coordinate input apparatus having the features described above.

With this configuration, by providing an electronic device with the touch-sensitive apparatus or the touch panel, the structure of the electronic device can be simplified and the manufacturing cost can be reduced.

BRIEF DESCRIPTION OF DRAWINGS

Fig. 1 is a plan schematic view showing a configuration of a touch-sensitive coordinate input apparatus in a first embodiment.

Fig. 2 is a vertical sectional view of the touch-sensitive coordinate input apparatus in the first embodiment.

Fig. 3 is a plan schematic view showing a configuration of the touch-sensitive coordinate input apparatus in a second embodiment.

Fig. 4 is a plan schematic view showing a configuration of the touch-sensitive coordinate input apparatus in another embodiment.

Fig. 5 is a vertical sectional view of the touch-sensitive coordinate input apparatus in still another embodiment.

DETAILED DESCRIPTION OF THE PREFERRED EMBODIMENTS

Hereinbelow, the embodiments of the present invention will be described with reference to the drawings.

In general, a capacitance C of a conductor is indicated by a formula below:

$$C = \varepsilon \cdot (s/d) \cdots \cdots (1)$$

where "$\varepsilon$" is a relative permittivity, "s" is a surface area of facing conductors, and "d" is a distance between the facing conductors. Therefore, the capacitance C can be changed in accordance with a change in "$\varepsilon$", "s" or "d".

The touch-sensitive coordinate input apparatus according to the present invention is made based on the idea that the capacitance C is changed by changing "d" in the formula (1). Namely, when an operator moves his/her finger on the surface of the dielectric, a distance between one of the four electrodes and the finger becomes shorter or longer so that the value of "d" in the formula (1) changes.

[First embodiment]

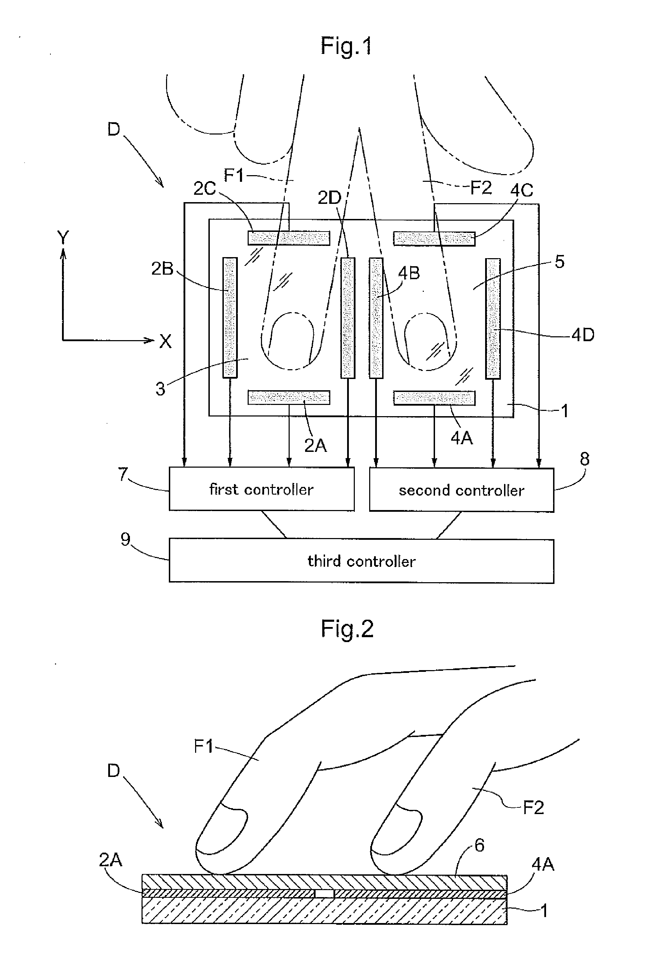

As shown in Figs. 1 and 2, a coordinate input apparatus D has a substrate 1 and a plurality of bar-shaped electrodes disposed thereon. In the present embodiment, there are provided eight electrodes in total. On a left side of the substrate 1, there is a first region 3 defined rectangularly by four electrodes 2A, 2B, 2C, and 2D, and on a right side of the substrate 1 there is a second region 5 defined rectangularly by another four electrodes 4A, 4B, 4C, and 4D.

With reference to the first region 3, for example, a pair of horizontally-extended electrodes 2A and 2C are disposed in parallel with each other at a vertical interval, and a pair of vertically-extended electrodes 2B and 2C are disposed in parallel with each other at a horizontal interval (hereinafter, the terms "horizontal" and "vertical" refer to the corresponding orientations in the drawing).

The vertically-extended bar-shaped electrodes 2B and 2D are made longer than the horizontally-extended bar-shaped electrodes 2A and 2C, and thus the first region 3 is formed in a vertically elongated rectangle by the electrodes 2A, 2B, 2C, and 2D annularly arranged at a certain interval from each other. The same is true of the structure of the second region 5.

The first region 3 and the second region 5 are arranged side by side at a certain interval from each other. The electrodes 2A-2D and 4A-4D can be pattern-printed on a surface of the substrate 1. The electrodes 2A-2D and 4A-4D are disposed at equiangular intervals (of 90 degrees).

The coordinate input apparatus D can be disposed, for example, on a display device (not shown) and used as a touch panel. In this case, on the surfaces of the first region 3 and the second region 5, there is installed a dielectric 6 bridging over these regions, with which operator's fingers F1 and F2 come into contact. The dielectric 6 is made of, for example, a transparent sheet material. Also, glass or synthetic resin can be optionally used as the dielectric.

As shown in Fig. 2, when the operator's finger F1 comes into contact with the surface of the dielectric 6, the capacitance C is given by the above formula (1) in accordance with the distance "d" between, for example, the electrode 2A and the finger F1. Therefore, when the finger F2 is moved within the first region 3 on the surface of the dielectric 6 to change "d", the capacitance C between the finger F1 and each of the electrodes 2A-2D changes accordingly. In this case, if this change in capacitance is converted into a coordinate signal in a converter circuit (not shown), for example, a cursor can be moved on the display device (not shown).

As shown in Fig. 1, in the first region 3, the electrodes 2A, 2C and the electrodes 2B, 2D correspond to a Y-axis and an X-axis, respectively. Likewise, in the second region 5, the electrodes 4A, 4C and the electrodes 4B, 4D correspond to the Y-axis and the X-axis, respectively. An alternate current charge of 125KHz is applied to each of the electrodes 2A-2D and 4A-4D. As the operator moves his/her finger F1 within the first region 3 on the surface of the dielectric 6, the capacity of each of the electrodes 2A-2D changes in accordance with the change in the distance between the finger F1 and each of the electrodes 2A-2D, and a voltage changes accordingly. Likewise, as the operator moves his/her finger F2 within the second region 5 on the surface of the dielectric 6, the capacity of each of the electrode 4A-4D changes in accordance with the change in the distance between the finger F2 and each of the electrodes 4A-4D, and a voltage changes accordingly.

As shown in Fig. 1, the coordinate input apparatus D has a first controller 7, a second controller 8, and a third controller 9. The first controller 7 is configured to calculate the changes of the capacitances of the four electrodes 2A-2D in the first region 3, and obtain information of a position at which a touch operation is performed in the first region 3. The second controller 8 is configured to calculate the changes of the capacitances of the four electrodes 4A-4D in the second region 5, and obtain information of a position at which a touch operation is performed in the second region 5. The third controller 9 is configured to calculate based on the position information obtained from the first region 3 and the second region 5. That is, the coordinate input apparatus D has the first controller 7 and the second controller 8 as position-detecting mechanism, and the third controller 9 as compound-processing mechanism.

The voltage obtained from the electrodes 2A-2D in the first region 3 is transferred to the first controller 7, and the voltage obtained from the electrodes 4A-4D in the second region 5 is transferred to the second controller 8. In each of the first controller 7 and the second controller 8, a coordinate is obtained by calculating the transferred voltage, and the obtained coordinates (position information) are output to the third controller 9. The third controller 9 can sequentially read the coordinates of the two points and output them as is, or alternatively, recognize actions such as zooming in and out based on the changes in two coordinates and output a mode of such an action. Then, various processing can be conducted in accordance with the output information.

In this manner, the capacitances in the first region 3 between the four electrodes 2A-2D and the finger F1, and the capacitances in the second region 5 between the four electrodes 4A-4D and the finger F2 change in accordance with the touch operation by the fingers F1 and F2, respectively, and this change is calculated separately for each region. As a result, the touch operation by the fingers F1 and F2 in a plurality of the regions 3 and 5 can be detected simultaneously.

In addition, since the four electrodes 2A-2D in the region 3 and the four electrodes 4A-4D in the region 5 are arranged rectangularly, there is no need for laminating two layers including the layer of the electrode group for detecting a coordinate in the X direction and that of the Y direction, and an electrode layer can be formed of a single layer. As a result, a structure of the coordinate input apparatus D can be simplified and thinned. Also, since a mode is adopted in which the capacitance of the region 3 (5) of the coordinate input apparatus D changes in accordance with the distance "d" between the electrodes 2A-2D (4A-4D) and the finger F, a magnitude of the pressing force of the finger F touching the dielectric 6 has no influence on the capacitance.

The third controller 9 conducts a calculation processing based on the position information obtained in the first controller 7 and the second controller 8 in the first region 3 and the second region 5, respectively. Therefore, it is possible to conduct a calculation processing of changes in the distance between two points detected in the respective regions 3 and 5, and then further process the result of the calculation. Consequently, it is possible to set the processing, for example, such that the touch operation of directing the two points away from each other is recognized as an action of zooming an image on the screen, and the touch operation of directing the two points close to each other is recognized as an action of reducing an image on the screen. In this manner a variation of input by the touch operation can be increased in the coordinate input apparatus D.

[Second embodiment]

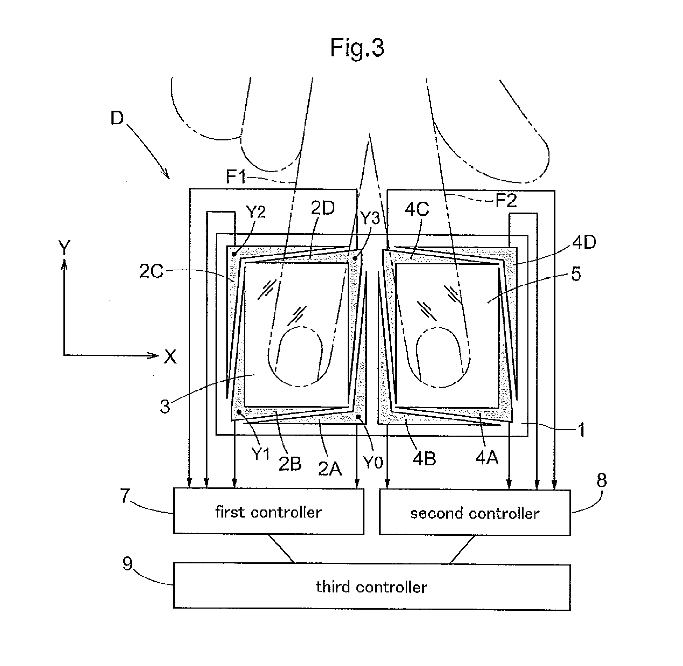

As shown in Fig. 3, the coordinate input apparatus D in the second embodiment has four electrodes 2A-2D which form a first region 3 and four electrodes 4A-4D which form a second region 5, each of which electrodes includes a horizontal part extending along the X-axis and a vertical part extending along the Y-axis to form an L-shape.

For example, with respect to the first region 3, by oppositely disposing a pair of electrodes 2B and 2D along a diagonal from a left-bottom corner to a right-top corner, the first rectangle region 3 is formed between the electrodes 2B and 2D. Furthermore, another pair of electrodes 2A and 2C are oppositely disposed along a diagonal from a right-bottom corner to a left-top corner so as to surround the pair of electrodes 2B and 2C. The same is true of the second region 5.

The touch-sensitive coordinate input apparatus D is configured in the following manner. The variation of the capacitance C of each of the electrodes 2A-2D and 4A-4D is detected as a voltage change, which variation corresponds to a change in the distance ("d" in the formula (1)) between each of the electrode 2A-2D and the finger F1 as well as each of the electrodes 4A-4D and the finger F2 caused by the movement of the finger touching the surface of the dielectric. The detected voltage changes as analogue data are converted into digital data so that the coordinates of the fingers F1 and F2 can be obtained by calculation using the digital data in the first controller 7 and the second controller 8, respectively.

In the coordinate input apparatus D configured as shown above, the voltage changes are indicated by formulae below, wherein the voltages obtained in the electrodes 2A, 2B, 2C, and 2D in the first region 3 are Y0, Y1, Y2, and Y3, respectively.

The voltage change of the electrodes in the X direction is:

$$\mid (Y0+Y3)\cdot(Y1+Y2) \mid \quad \cdots\cdots(2)$$

The voltage change of the electrodes in the Y direction is:

$$\mid (Y2+Y3)\cdot(Y0+Y1) \mid \quad \cdots\cdots(3)$$

The coordinate of the finger 1 can be calculated by the above formulae.

As described above, each of the four electrodes 2A-2D (4A-4D) arranged in opposing corners has parts protruding in biaxial directions. As a result, the area becomes larger in which the electrodes 2A-2D and 4A-4D can detect changes in voltage caused by the movement of the fingers F1 and F2, and thus the voltage changes can be detected regardless of the positions of the fingers F1 and F2 in the regions 2 and 3, respectively. In addition, with a calculation processing as shown in the formulae (2) and (3) in each of the first controller 7 and the second controller 8, an amount of voltage change can be made larger, which results in a higher resolution. Incidentally, when the finger F is moved in the X direction, for example, provided that Y0 and Y3 are changed from 0V to 2V, and Y1 and Y2 from 2V to 0V, the voltage change (movement data) can be calculated according to the above formula (2):

$$(2+2)\cdot\{\cdot2+(\cdot2)\} =4+4=8V.$$

The value of the movement data is doubled as compared with the value obtained by the aforesaid apparatus even in this simple calculation, which illustrates enhancement of the resolution.

More specifically, each of the horizontal and vertical protruding parts of each of the electrodes 2A, 2B, 2C, and 2D is in a triangle shape tapering off from a corner of the rectangular first region 3 towards the neighboring corner (i.e. the triangle is elongated either horizontally or vertically) and the elongated triangle is arranged in approximately parallel with a neighboring elongated triangle of the adjacent electrode with the elongated triangle oriented in an opposite direction to a direction of the neighboring elongated triangle. With respect to each of the electrodes 2B and 2D disposed on an inner side of the substrate 1, a side facing the first region 3 in one triangle is arranged perpendicularly to a side facing the first region 3 in the other triangle of the same electrode. With respect to each of the electrodes 2A and 2C disposed on an outer side of the substrate 1, a side apposite to the first region 3 in one triangle is arranged perpendicularly to a side opposite to the first region 3 in the outer triangle of the same electrode.

[Other embodiments]

(1) In the above embodiments, the touch-sensitive coordinate input apparatus has been described while the touch panel is taken as an example in which the coordinate input apparatus D is disposed on the display device. However, the present invention is not limited to the touch panels and may be used alone without being applied to the display device. Also, the coordinate input apparatus D alone or the touch panel having the coordinate input apparatus D on the display device may be applied to an electric device. By providing the electric device with the coordinate input apparatus D or the touch panel having the simple configuration, the manufacturing cost of the electric devices can be reduced.

(2) In the above embodiments, at least one of the four electrodes 2A-2D (or 4A-4D) may be made of a transparent material. For example, in the first embodiment where the coordinate input apparatus D is used for a touch panel, when the electrodes 2D and 4B are made of a transparent material, a visual recognition area of the display device such as liquid crystal display disposed thereunder can be extended and the operability of the coordinate input apparatus D improves. As for the electrodes 2A-2C, 4A, 4C, 4D disposed in a periphery of the substrate 1, even if they are not made of transparent materials, they can be hidden by decorations provided on an outer face side. The same applies to the case of the second embodiment, when the electrodes 2A, 2D and 4B, 4C are made of a transparent material. Also, by making all the electrodes with transparent materials, the visual recognition area of the display device, such as liquid crystal display disposed under the coordinate input apparatus D used for a touch panel, can be extended to include electrodes 2A-2D, 4A-4D arranged rectangularly.

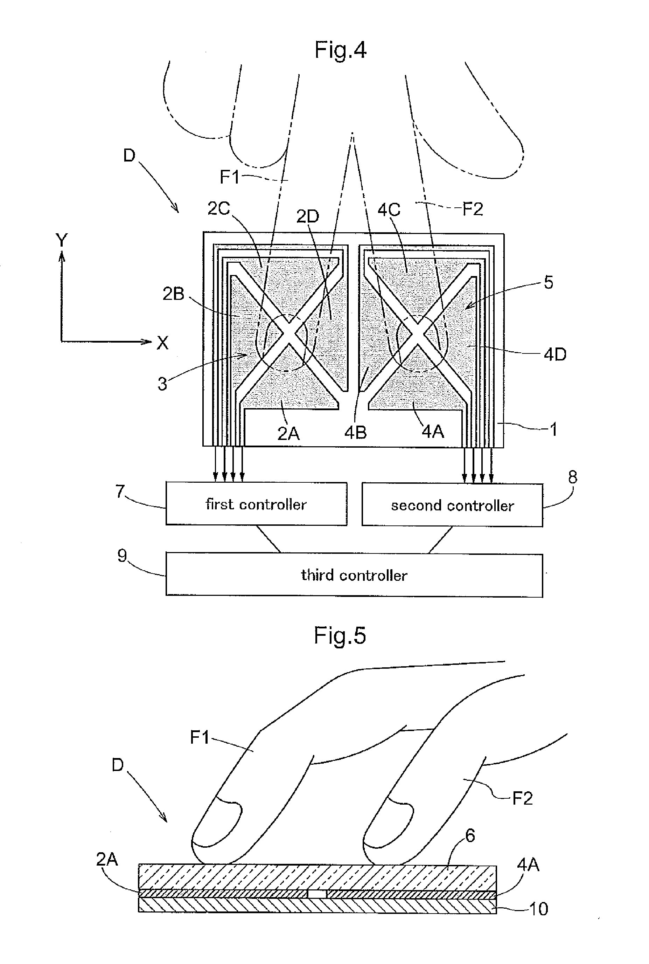

(3) The electrodes 2A-2D, 4A-4D disposed on the substrate 1 of the coordinate input apparatus D may be made of ITO. Transparent electrodes can be easily made with the use of ITO. When the electrode are made of ITO, for example, the four electrodes 2A-2D (4A-4D) can be closely disposed as shown in Fig. 4. In this case, the capacitances vary in accordance with increase or decrease in contact areas between the fingers F1, F2 and the dielectric 6.

(4) As shown in FIG. 5, the coordinate input apparatus D may be composed of a glass substrate plate as a dielectric 6 which provides a contact face for fingers, and the electrodes 2A, 4A and the like may be formed on the opposite side of the contact face of the glass plate 6. In this case, the face of the glass plate 6 on which the electrodes are formed is covered with a protecting film 10 or the like.

(5) While the above embodiment shows a touch operation to the coordinate input apparatus D by the fingers F1 and F2 of an operator, the touch operation to the coordinate input apparatus D is not limited to the use of the fingers F1 and F2 and a stylus of conductive metal can also be used.

(6) In the above embodiments, two regions were used as an example of the plurality of regions disposed in the coordinate input apparatus D. The number of regions is not limited to two, and three or more regions may be used. The present invention is widely applicable to a variety of electronic devices which receive touch-sensitive coordinate inputs, such as mobile phones, mobile devices, computers, and display devices.

**Claims**

1. A touch-sensitive coordinate input apparatus comprising:

    a plurality of regions (3,4) on a substrate (1), each region being defined by four electrodes (2A, 2B, 2C, 2D; 4A, 4B, 4C, 4D) disposed rectangularly;
    a dielectric (6) disposed across the four electrodes in each region(3, 4);
    a position-detecting mechanism (7,8) for obtaining position information of a touch operation by calculating changes in capacitance of the four electrodes (2A, 2B, 2C, 2D; 4A, 4B, 4C, 4D) for each region caused by the touch operation to the dielectric(6) within the region (3,4); and
    a compound-processing mechanism (9) which conducts a calculation processing based on the position information in at least two of the plurality of regions (3,4).

2. The apparatus according to claim1, wherein said at least two of the plurality of regions (3,4) are adjacently disposed each other.

3. The apparatus according to claim 1 or 2, wherein the dielectric (6) is made of a transparent material.

4. The apparatus according to claim 3, wherein the dielectric (6) is made of glass.

5. The apparatus according to any one of claims 1 to 4, wherein at least one of the four electrodes (2A, 2B, 2C, 2D; 4A, 4B, 4C, 4D) is made of a transparent material.

6. The apparatus according to claim 5, wherein the electrodes (2A, 2B, 2C, 2D; 4A, 4B, 4C, 4D) are made of ITO

7. A touch panel comprising:

    a display device; and
    the touch-sensitive coordinate input apparatus according to any one of claims 1 to 5 which is disposed on the display device.

8. An electronic device comprising the touch-sensitive coordinate input apparatus according to any one of claims 1 to 6 or the touch panel according to claim 7.

## Fig.1

first controller

second controller

third controller

## Fig.2

# Fig.3

first controller

second controller

third controller

## Fig.4

first controller

second controller

third controller

## Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005049978 A
- JP 2009009249 A